(19) Europäisches Patentamt
European Patent Office
Office européen des brevets

(11) **EP 3 293 704 A1**

(12) **EUROPEAN PATENT APPLICATION**

(43) Date of publication:
14.03.2018 Bulletin 2018/11

(51) Int Cl.:
*G06T 15/50* [(2011.01)]

(21) Application number: 16306126.0

(22) Date of filing: 08.09.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **Lecocq, Pascal**
35576 Cesson-Sévigné (FR)
• **Petitjean, Victor**
35576 Cesson-Sévigné (FR)
• **Marvie, Jean-Eudes**
35576 Cesson-Sévigné (FR)

(74) Representative: **Huchet, Anne et al**
**TECHNICOLOR**
**1-5, rue Jeanne d'Arc**
**92130 Issy-les-Moulineaux (FR)**

(54) **DEVICE AND METHOD FOR SCENE RENDERING WITH PRODUCT IMPORTANCE SAMPLING**

(57) For rendering a 3D scene comprising a surface and illuminated by an area light source (A), a glossy part of a radiance is represented by drawing samples between the light source and the surface according to a random sampling process exploiting a density function (L3). Two density distributions are determined: a first one associated with reflectance properties at a shading point of the surface and with a view direction $(\overrightarrow{\omega_o})$, and a second one associated with geometrical properties of the light source. The density function for the shading point is obtained from a product of the first and second density distributions, which are represented respectively by a first and a second cosine lobes (L1, L2). Preferably, that density function is itself represented by a third cosine lobe (L3).

Application to a GPU.

**Fig 7**

**Description**

**1. Technical field**

The invention relates to the domain of image rendering in computer graphics, notably for computing lighting due to area light sources though importance sampling in path tracing. The invention is relevant to GPU (Graphics Processing Unit) implementations for production rendering, lighting previsualisation (or previz) tools and video game engines.

The invention is more particularly directed to glossy surfaces, or to the specular part of surface rendering. In the present disclosure, the term "rendering" refers broadly to the conversion of geometry and material data into visual images.

**2. Background art**

Physically based shading with area light is a challenging topic in computer graphics. Namely, a point light source modeling for approximating the lighting has generally been exploited in CGI (Computer-Generated Imagery) and video games, due to its mathematical simplicity. However, it suffers from severe limitations when located close to surfaces. Area lights provide more natural lighting, giving notably VFX (visual effects) and game creators finer control on light balancing within a scene, to reduce contrast or match some artistic criteria.

Now, computing lighting due to an area light source (e.g. polygonal or spherical) usually involves a 2D integration of a radiance term over a hemisphere surrounding a receiving point, more precisely over a solid angle sustained by the light source surface. This applies in particular to glossy surfaces, as well as to determining the glossy part of a light flux reflected from an enlightened surface.

The word "glossy" generally refers to shininess, smooth surfaces appearing typically shiny or glossy to the eye, due to a significant amount of light being focused around a privileged direction.

In this respect, a glossy surface in reflection is nearly-specular. Namely, while a perfectly smooth surface obeys Snell's law, which involves a unique reflection direction for any incoming ray (that direction being symmetric with respect to the incoming ray with respect to a normal to the illuminated surface), more realistic representations rely on reflected light distribution around that direction. The latter constitutes then merely a preferred direction for reflected light.

More generally, a radiation reflected by a surface is usually represented as comprising a glossy part, identified as a specular component, in addition to diffusion and/or ambient parts, respectively representative of a diffuse reflection and an ambient lighting reflection by the illuminated surface. The characterizing light reflection properties of a surface are generally given by a Bi-directional Reflectance Distribution Function or BRDF.

In what follows, a glossy part of a radiance designates a radiation concentrated around an oriented axis in reflection. In a more specific kind of glossy radiation, the behavior of the radiation around that axis is controlled by a cosine function raised by a n-power. The n power is then a glossiness or shininess constant coefficient that is worth at least 1, and is typically worth several tens or hundreds. The larger n, the more the glossy reflection is close to a perfect mirror-like specularity (smaller and sharper highlights).

Widespread models for the specular term are based on Phong lighting, which provides an empirical representation of local illumination of points on a surface, as well known to a person skilled in the art. Accordingly, the specular component of light reflected at a surface reflection point can contain a factor derived from the dot product of a unit vector $\overrightarrow{\omega_i}$ ("i" standing for incoming) pointing to incident light direction, and a unit vector $\overrightarrow{r_{\omega_o}}$ corresponding to the mathematical reflection of a unit vector $\overrightarrow{\omega_o}$ ("o" standing for outgoing) pointing to an observer (viewing direction) over the surface at the considered reflection point. That factor is then given by the dot product raised by an n-power, where n stands for a Phong exponent, which corresponds to the shininess constant above:

$$(\overrightarrow{\omega_i} . \overrightarrow{r_{\omega_o}})^n.$$

Computing such an n-power factor proves generally computationally expensive, notably compared with the calculation of the diffuse and ambient terms. This is especially true with an area light source, because computations must be iterated over the surface of the light source.

As a whole, existing techniques for processing area light sources either require huge computation time to achieve good results or make some quality trade-off to work in real time.

In order to estimate the radiance of glossy surfaces illuminated by area lights (the radiance designating a light flux density per unit solid angle per unit area), two families of approaches have been developed: analytic ones and sampling ones.

Analytical approaches have been developed in particular by James Arvo, in his PhD thesis "Analytic methods for simulated light transport", Yale University, 1995, and in his article "Applications of Irradiance Tensors to the Simulation of Non-Lambertian Phenomena", In Computer Graphics Proceedings, Annual Conference Series, ACM SIGGRAPH, 1995. He introduced a closed form expression of radiance integral based on tensor theory and Stokes theorem, for polygonal light sources and Phong reflectance models. The surface integral is developed as a sum of 1 D line integrals for which an analytic though complicated expression exists. Using integration by parts, a recurrence relation is derived, allowing incremental evaluation of the line integrals in $O\left(\frac{n+2}{2}\right)$ time.

The solution can be easily implemented in a GPU using any shading or computing language for real-time performances. However, for surface with high-order Phong exponents (e.g. greater than 100), the evaluation becomes computationally expensive. To overcome that issue, Arvo proposes early termination of the iteration loop once a desired relative accuracy is reached. Anyway, in many situations, the number of iterations is high for reaching performance hits during navigation. Moreover, execution of variable length on a GPU may result in poor performances due to code path divergence on parallel threads.

The sampling approaches rely on discrete evaluation of the radiance integral either by considering discretization of area light surfaces or by considering a stochastic sampling (typically Monte Carlo integration) of the hemisphere surrounding a receiving point. Monte Carlo methods for Global Illumination are notably studied in the PhD thesis by Eric Veach, "Robust Monte Carlo methods for light transport simulation", Stanford University, 1997. While those techniques work quite well with Lambertian surfaces, they may require a huge amount of samples when dealing with non-Lambertian surfaces, resulting in high computational costs.

Importance Sampling or IS refers to choosing a density function similar to a radiance integrand (an integrand being a functional term to be integrated over a given domain), so that samples are drawn towards areas that contribute most to a final result.

A widely used IS strategy for glossy materials consists in drawing samples according to BRDF lobes. For highly specular surfaces, samples are thus drawn where contributions come from, and a quick convergence is obtained. However, an increase in surface roughness leads to drawing more samples towards useless directions. In particular, if an area light source is small, the chance of intercepting it is reduced and noise is aggravated.

Another IS strategy consists in drawing samples towards the considered area light source. However, for a wide light source and a very specular surface, the odds of drawing samples in appropriate reflection directions are quite small.

For leveraging the advantages of those two IS strategies, it was proposed to combine them. In particular, E. Veach introduced Multiple Importance Sampling or MIS in his above-mentioned thesis. According to that approach, both sampling strategies are used together and recombined using a balance heuristic.

In spite of its efficiency in mitigating noise levels, that method requires to consider two IS strategies at the same time and does not take their relative weights of contributions into account.

Another IS combining solution was developed by S. Hernholz and al. as laid out in their article "Product Importance Sampling for Light Transport Path Guiding", Eurographics Symposium on Rendering, Computer Graphics Forum, Vol. 35, Issue 4, July 2016. It is based on a product of the BRDF and illumination distributions, relying on anisotropic Gaussian Mixtures.

Though that method can provide significantly enhanced images, notably in case of strong glossy transport or difficult illumination, it also involves costly precomputation passes for modeling BRDF of materials and illumination of each surface.

## 3. Summary

The purpose of the present disclosure is to overcome the disadvantages of the prior art, by offering a potentially efficient solution for estimating the radiance of glossy surfaces, or the radiance glossy part of non-Lambertian surfaces, illuminated by area lights.

An object of the disclosure is notably a sampling method advantageously reducing the noise inherent to conventional Monte Carlo techniques and thus potentially improving the overall quality of shading and/or reducing rendering time.

Another object of the disclosure is a sampling method making possible a determination on-the-fly of a sampling distribution, without the need for precomputation.

Additional potential advantages of the present disclosure include easy implementation on graphics hardware, production renderers or games engines, faster performance than previous solutions, no need for caching involving precomputation, and/or compatibility with any ray-tracing or deferred rendering pipeline.

In this respect, the present disclosure relates to a device for rendering a 3D scene comprising at least one surface and illuminated by at least one area light source. That device includes one or more processor(s) configured for representing a glossy part of a radiance of the surface(s) by drawing samples in the 3D scene between at least one of the area light sources, designated as a current area light source, and the surface(s), according to a random sampling process exploiting at least one density function for randomly drawing the samples. The density function is obtained for one shading point of the surface(s), designated as a current surface point, from a product of a first density distribution associated with reflectance properties at the current surface point and with a view direction on one hand, and of a second density distribution associated with geometrical properties of the current area light source on the other hand.

According to the present disclosure, the first density distribution is represented by a first cosine lobe and the second density distribution is represented by a second cosine lobe.

In the above, a "shading point" generally refers to a point at which a rendering process is applied.

A "cosine lobe" is defined as a powered cosine function in the 3D space, the cosine coming from a dot product between a reference unit direction called an axis (or normalized axis) and a considered direction. More precisely, a cosine lobe function c can be defined by its axis $\vec{a}$ and an exponent $\lambda$, so that for any vector $\vec{v}$:

$$c(\vec{v}; \vec{a}, \lambda) = \max(0, \vec{a} . \vec{v})^{\lambda}$$

While employing product importance sampling is known from the teaching by S. Hernholz et al. as mentioned above, and the representation of a BRDF distribution as a cosine lobe is usual from the Phong modeling, the present solution appears quite unexpected and contrasts with the IS common practice.

Indeed, for exploiting a product IS technique, it is assumed that the product of the two density distributions (such as in particular respectively BRDF-related and light source-related) has a known expression for sake of satisfying computations. This is why S. Hernholz et al. utilize two Gaussians, insofar as the product of two Gaussian mixtures is itself a Gaussian mixture, which has parameters that can be obtained analytically from parameters of the two multiplied Gaussian mixtures. In this respect, a Gaussian mixture model representation of the BRDF is needed, instead of a common cosine lobe representation.

On the contrary, employing two cosine lobe representations for the first and second density distributions appears quite inappropriate and would have been turned down by the skilled person. First, because the product of such distributions has not any convenient expression and is unsuited to sample drawing. Secondly, because modeling illumination at a surface point with a cosine lobe is quite unusual.

In spite of those observations based on the previous usual knowledge and practice, and contrary to expectations, the present device proves to be particularly efficient in advantageous embodiments.

Preferably, the device for rendering comprises an output configured for providing graphical representation data obtained by the processor(s) to at least one storage unit and/or to at least one display unit. In particular embodiments, the device includes the at least one storage unit and/or the at least one display unit.

Preferably, the product of the first density distribution and the second density distribution is represented by a third cosine lobe.

This representation can potentially provide a significantly improved sampling operation, since it may then be effected on a well-known cosine lobe basis.

More precisely, the first cosine lobe having a first normalized axis $\overrightarrow{\omega_1}$ and a first exponent $\lambda_1$, the second cosine lobe having a second normalized axis $\overrightarrow{\omega_2}$ and a second exponent $\lambda_2$, and the third cosine lobe having a third normalized axis $\overrightarrow{\omega_3}$ and a third exponent $\lambda_3$, the at least one processor is advantageously configured for determining the third normalized axis $\overrightarrow{\omega_3}$ and third exponent $\lambda_3$ from the first and second exponents $\lambda_1$ and $\lambda_2$ and from the first and second normalized axes $\overrightarrow{\omega_1}$ and $\overrightarrow{\omega_2}$, by means of following computation formulas, where ln designates a logarithm:

$$\text{for i} = 1, 2, \; \mu_i = -\frac{\ln(2)}{2^{-1/\lambda_i} - 1}$$

$$\mu_m = \mu_1 + \mu_2$$

$$\overrightarrow{q_m} = (\mu_1 \overrightarrow{\omega_1} + \mu_2 \overrightarrow{\omega_2})/\mu_m$$

$$\vec{\omega_3} = \frac{\vec{q_m}}{\|\vec{q_m}\|}$$

$$\mu_3 = \mu_m \|\vec{q_m}\|$$

$$\lambda_3 = -\frac{\ln(2)}{\ln\left(-\frac{\ln(2)}{\mu_3} + 1\right)}$$

with $\mu_1$, $\mu_2$, $\mu_m$, $\vec{q_m}$ being intermediary parameters and $\|.\|$ designating a norm.

The notation "ln" typically stands for the Naperian logarithm, but other logarithms amount to equivalent computations.

A "normalized axis" consists in a unit vector, representative of the considered cosine lobe.

In what follows, the "half-width" of a cosine lobe, having a normalized axis and being expressed by a cosine lobe function of an angle offset with respect to that normalized axis, refers to the Half-Width at Half Maximum (HWHM) of that function.

The preferred implementations involving the above formulas are implicitly reflecting the behavior of Spherical Gaussians (SG), since with the above determination, the half-widths of the first and second cosine lobe functions prove to correspond to the half-widths of two SGs, the product of which is itself an SG having a half-width corresponding to the half-width of the third cosine lobe function.

In alternative embodiments, the product of cosine lobes is processed with implicit reference to SG operators in other ways. In particular, the first cosine lobe having a first normalized axis and a first exponent, and being defined as a first cosine lobe function of a first offset angle with respect to the first normalized axis, the second cosine lobe having a second normalized axis and a second exponent, and being defined as a second cosine lobe function of a second offset angle with respect to the second normalized axis, and the third cosine lobe having a third normalized axis and a third exponent, and being defined as a third cosine lobe function of a third offset angle with respect to the third normalized axis, the at least one processor is advantageously configured for determining the third normalized axis and third exponent of the third cosine lobe from the first and second normalized axes and the first and second exponents.

That determination is such that the first cosine lobe function coincides with a first Spherical Gaussian function of the first offset angle at at least one first representative position on said first cosine lobe function and first Spherical Gaussian function, the second cosine lobe function coincides with a second Spherical Gaussian function of the second offset angle at at least one second representative position on the second cosine lobe function and second Spherical Gaussian function, and the third cosine lobe function coincides with a third Spherical Gaussian function of the third offset angle at at least one third representative position on the third cosine lobe function and second Spherical Gaussian function, the third Spherical Gaussian function being a product of the first and second Spherical Gaussian functions and at least one of the first, second and third representative positions being distinct from a half-maximum position.

For example, the considered position on all or some of the cosine lobe functions and SG functions is chosen among a two-thirds maximum position (i.e. the concerned cosine lobe and SG functions coincide at angle values corresponding to the two-thirds of the function maxima), a one-third maximum position and a quarter maximum position.

In particular implementations, the second cosine lobe being associated with a second normalized axis and with a second exponent, the second normalized axis is directed from the current surface point towards a center of the current area light source.

Then, the current area light source having an edge, the second exponent is advantageously given in function of a greatest angle $\theta_m$ between the second normalized axis and a direction from the current surface point towards that edge, by: $\ln(\alpha)$ / $\ln(\cos(\theta_m))$, with $\alpha$ being a parameter between 0 and 1.

That parameter $\alpha$ is preferably comprised between 0.05 and 0.2 and is still preferably worth 0.1.

In some embodiments, the current area light source is polygonal, so that the center thereof is derived from a mean of all normalized directions towards each vertex of that light source, and the greatest angle corresponds to a furthest vertex of that light source.

In particular embodiments, the first cosine lobe is directed along a normalized reflected view direction, which corresponds to a reflection against the surface(s) at the current surface point of an additive inverse of the view direction.

The first cosine lobe corresponding to a Phong distribution model with a Phong exponent, modelling a bi-directional reflectance distribution, the first cosine lobe is then advantageously associated with a first normalized axis equal to that reflected view direction and with a first exponent equal to the Phong exponent.

Advantageously, the bi-directional reflectance distribution is approximated by the Phong distribution model by using a non-linear least square method.

In a first class of implementations, the random sampling process relies on a discretization of a surface of the area light source, the samples corresponding to integration directions.

In a second class of implementations, the random sampling process relies on a stochastic Monte Carlo integration, the samples corresponding to ray paths.

Another object of the invention is a GPU comprising at least one processor adapted to creating images, at least one frame buffer adapted to storing those created images and at least one output to a display adapted to providing the created images from the frame buffer(s) to the display. The GPU comprises a device compliant with the present disclosure.

The present disclosure also pertains to a method for rendering a 3D scene comprising at least one surface and illuminated by at least one area light source. The method includes representing by at least one processor a glossy part of a radiance of the surface(s) by drawing samples in the 3D scene between at least one of the area light sources, designated as a current area light source, and the surface(s), according to a random sampling process exploiting at least one density function for randomly drawing those samples. The method comprises:

- determining a first density distribution associated with reflectance properties at one shading point of the surface(s), designated as a current surface point, and with a view direction,
- determining a second density distribution associated with geometrical properties of the current area light source,
- obtaining the density function for the current surface point from a product of the first density distribution and the second density distribution,

According to the present disclosure, the first density distribution is represented by a first cosine lobe and the second density distribution is represented by a second cosine lobe.

That method is preferably executed by a device for rendering a 3D scene according to any embodiment of the present disclosure.

In addition, the present disclosure concerns a computer program for rendering a 3D scene, comprising software code adapted to perform steps of a method compliant with the present disclosure.

The present disclosure further pertains to a non-transitory program storage device, readable by a computer, tangibly embodying a program of instructions executable by the computer to perform a method for rendering a 3D scene compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. List of figures

The present disclosure will be better understood, and other specific features and advantages will emerge upon reading the following description of particular and non-restrictive illustrative embodiments, the description making reference to the annexed drawings wherein:

- figure 1 is a block diagram representing schematically a device for rendering a 3D scene by sample drawing, compliant with the present disclosure;
- figure 2 illustrates a physical configuration of a surface enlightened by an area light source and scattering a radiance towards an observer, where a reflective glossy part of the radiance can be estimated by a device such as the one illustrated on figure 1;
- figure 3 is more detailed block diagram representation of a module for determining a density function in the device shown on figure 1;
- figure 4 represents schematically two density distributions exploited with the device of figure 1 in determining a density function;
- figure 5 represents schematically a 3D representation of operations in computing an illumination lobe with the device of figure 1, as one of the two density distributions of figure 4;
- figure 6 represents schematically a planar projection of the 3D representation of figure 5 in which one vertex is omitted, with additional computation aspects;
- figure 7 represents schematically the determination of the density function representation from the density distributions of figure 4, with the device of figure 1;
- figure 8 is a flow chart showing successive rendering steps executed with the device of figure 1;
- figure 9 diagrammatically shows a graphics processing apparatus comprising the device represented on figure 1.

## 5. Detailed description of embodiments

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

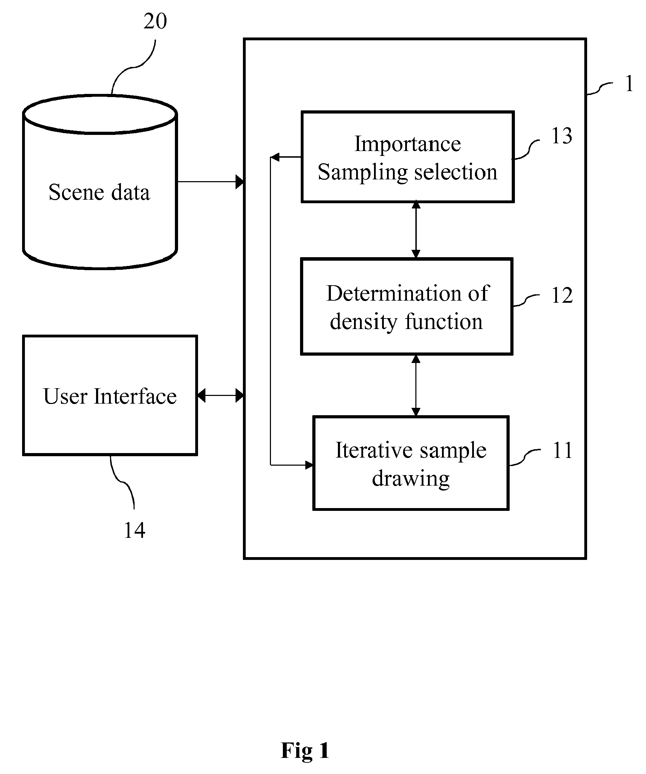

The present disclosure will be described in reference to a particular functional embodiment of device 1 for rendering a 3D scene, as illustrated on **Figure 1.**

The device 1 is adapted to estimate a glossy part of a reflected radiation due at least partly to an area light source. It is particularly appropriate for glossy surfaces (in reflection and/or in transmission), but can also be relevant to various kinds of surfaces. In the general situation in reflection, the radiation including typically an ambient component, a diffusion component and a specular component, the device 1 is directed at least to the latter.

Also, the device 1 is configured for estimating the glossy part at a specific surface point and directed to a specific view direction, iteratively for various surface points, view directions and light sources, advantageously at least in part in parallel. The device 1 is adapted to determine a radiance at the considered point in the considered direction (which consists in a light flux density per unit solid angle per unit area), and in particular implementations, is also adapted to determine a spectral radiance (radiance per frequency or wavelength).

Particular embodiments include GPU rendering systems, configured for evaluating the radiance of glossy surfaces illuminated by area lights. More specifically, the device 1 is then advantageously implemented in a programmable rendering pipeline, either in a fragment shader (in charge of processing fragments generated by a rasterizer) or alternatively in a computing kernel involving any language with GPU parallel computing capabilities, such as notably Compute Shader, CUDA (Compute Unified Device Architecture) or OpenCL (Open Computing Language). Particular embodiments include production renderers and games engines. The device 1 is further advantageously exploited for real-time rendering and/or with soft shadow techniques based on shadow silhouette casting.

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines.

In all what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

The device 1 comprises a module 11 for iterative sample drawing, a module 12 for determination of a density function and a module 13 for importance sampling selection, based on the density function. The three modules 11, 12 and 13 have interrelationship, since e.g. a drawing of a sample may have an influence on the determination of a density function for a next surface point at a later step.

Also, the device 1 is preferably adapted to process several area light sources, by linearly superimposing their effects, successively or in parallel.

Information can be entered and retrieved by a user via a user interface 14 interacting with the device 1. The user interface 14 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The device 1 is also adapted to be fed with scene data from storage resources 20. Alternatively or complementarily, the device 1 is configured for receiving scene data from other devices or parts of devices, advantageously in real time. Those scene data include information on geometry (e.g. objects and light sources shapes, sizes and positions in a 3D scene, including with respect to viewpoints, depth maps and/or shadow maps), on light properties of materials (e.g. translucent objects, specular or diffusion surfaces, reflectance values, kinds of light behavior representations) and on lighting conditions (e.g. kinds of light sources, considered as punctual or as area sources, lighting intensities). The device 1 is preferably configured for being able to process such data when the latter vary dynamically in time.

The storage resources 20 can be available from any kind of appropriate storage means, which can be notably a RAM or an EEPROM (Electrically-Erasable Programmable Read-Only Memory) such as a Flash memory, possibly within an SSD (Solid-State Disk).

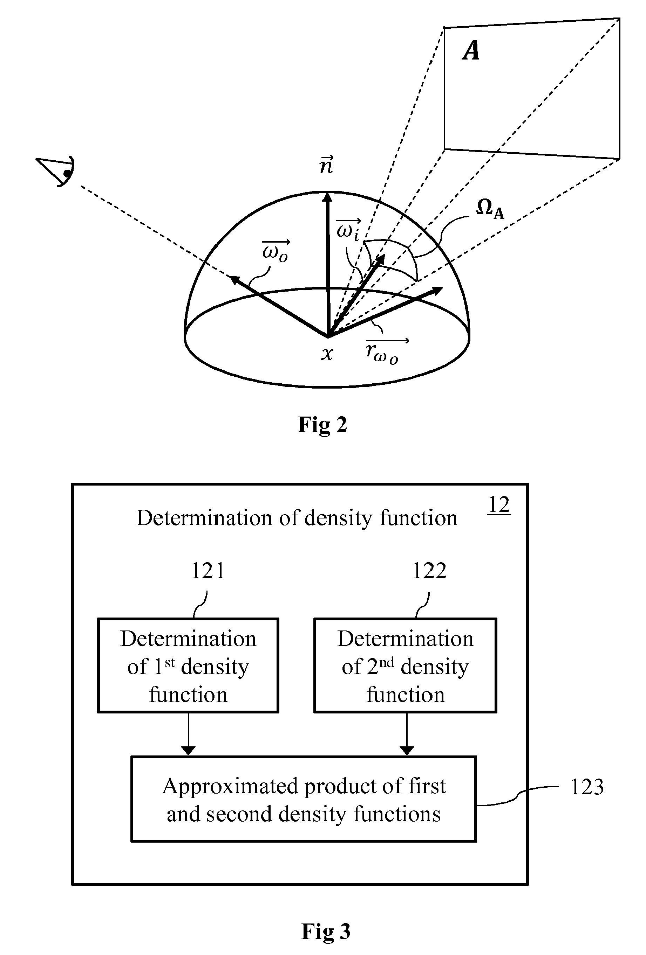

The physical situation and its representation are clarified on **Figure 2** for a particular surface point x lying on an object lighted by an area light source A. That object has a surface at point x which is normal to a unit vector $\vec{n}$. The considered point x may notably correspond to a fragment processed in a rendering pipeline.

The surface of the light source A is bounded by edges forming a polygonal shape - a rectangle on the represented example. Though the device 1 could be applied to various shapes of light source surfaces, a representation by such a polygonal shape is preferred and can lead to particularly efficient and reliable computations in best implementations.

The directions from the light source A to the point x are given by an unit vector $\vec{\omega_l}$, directed from point x towards the source surface A. Also, a unit hemisphere is defined around point x and directed along normal vector $\vec{n}$. The surface of the light source $A$ is projected onto that hemisphere into a spherical projection associated with a solid angle $\Omega_A$ - since surface $A$ is a polygon, its spherical projection is a spherical polygon, the edges of which are great arcs (i.e. segments of great circles).

A viewing direction towards an observer is defined through a unit vector $\vec{\omega_o}$. Therefrom, a unit vector $\vec{r_{\omega_o}}$ is considered, which represents the reflection of the viewing direction $\vec{\omega_o}$ against a tangent plane corresponding to the surface at point x. Namely, vector $\vec{r_{\omega_o}}$ is derived from vector $\vec{\omega_o}$ by an application of the Householder matrix $[\mathbf{I} - 2\vec{n}\,\vec{n}^T]$, where **I** is the identity matrix and "T" designates a transposition.

The reflectance properties of the lightened surface at point x, depending on the surface material, are represented by a BRDF function (bidirectional reflection distribution function) noted $f_r(x, \vec{\omega_l}, \vec{\omega_o})$. As well known to a person skilled in the art, a BRDF function relates radiance incident at a point on a surface to radiance reflected from that point. The radiance $L(x, \vec{\omega_o})$ scattered at point M towards observer (color perceived by the eye) is then defined by a hemispherical integral over the solid angle $\Omega_A$ sustained by the surface of the light source $A$:

$$L(x, \vec{\omega_o}) = \int_{\Omega_A} L_A(x, \vec{\omega_i})\ f_r(x, \vec{\omega_i}, \vec{\omega_o})\ (\vec{\omega_i}.\vec{n})\ d\omega_i \qquad (1)$$

where $d\omega i$ represents a differential variation of the solid angle.

In the present examples and for sake of illustration, the BRDF function is given by an energy conservative Phong distribution model, which provides a common way of representation. As familiar to a skilled person, the radiance is then split up into an ambient component, which accounts for incident light not coming directly from a light source, a diffuse component and a specular component. That local shading model can be replaced by a more sophisticated one, in which the ambient term is turned to a component taking interactions between objects into consideration (global shading model).

In the following, only the specular component will be considered, since it is relevant to the glossy (or specular) part of the radiation reflected by the surface. In particular situations, the considered surface is itself glossy (or nearly specular), so that the radiation is identified with its glossy part for the computations.

By noting $\rho_s$ a specular reflectivity, which provides a ratio of reflection of the specular term of incoming light, and supposing that this term is constant at point x (at least for a given color channel) as usually done in the Phong model, the glossy part is then given by:

$$f_r\left(x, \overrightarrow{\omega_i}, \overrightarrow{\omega_o}\right) = \rho_s\left(x\right) \frac{n+2}{2\pi} \left(\overrightarrow{\omega_i} . \overrightarrow{r_{\omega_o}}\right)^n \qquad (2)$$

where n represents the Phong exponent that controls the glossiness.

More generally, in variant implementations, the device 1 is also (or instead) adapted to other BRDF representations of the specular component than Phong distribution models. This applies particularly to a radiation having a distribution behavior around an oriented axis, which is controlled by a cosine function raised by a shininess coefficient, the cosine being given by the angle between the reflected view and an incoming light direction.

The device 1 is adapted to estimating the radiance by a sampling method that takes into account both the BRDF and the light distribution according to respective weights. As developed below, each of those distributions is represented by a cosine lobe, and the sampling distribution for a point x to shade is the product of the two cosine lobes, which is approximated by another cosine lobe.

In this respect, as illustrated on **Figure 3,** the module 12 for determination of the density function comprises a module 121 for determination of a first density function (corresponding to the BRDF), a module 122 for determination of a second density function (corresponding to the light distribution), and a module 123 for determining a approximated representation of the product of the first and second density distributions.

The approximation of that product by a cosine lobe is a useful distribution when it comes to Importance Sampling, samples being then easily drawn.

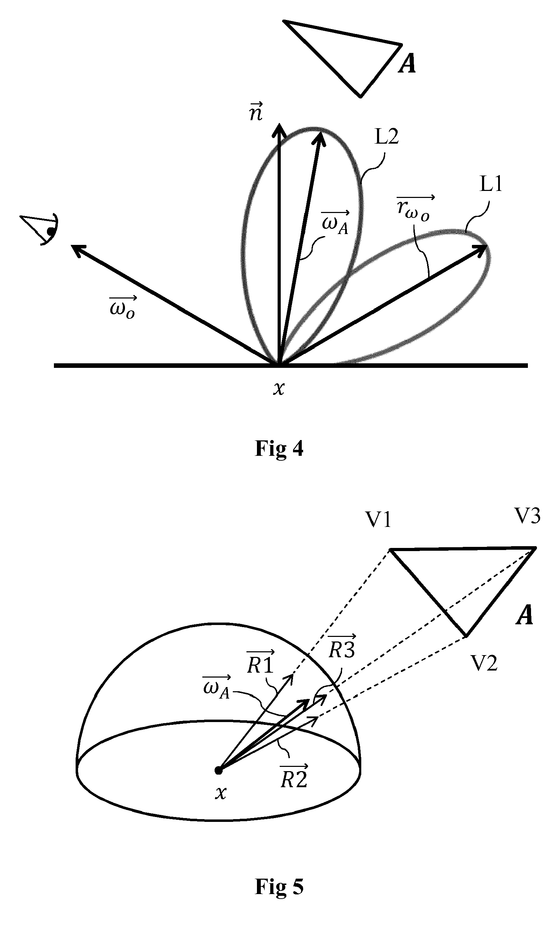

The operation of the device 1 will now be detailed, in relation with **Figures 4 to 7.** As visible on Figure 4, an area light source A, triangular in the represented example for sake of clearer presentation, is illuminating a specular-only surface ($\rho_d = 0$). Of course, the area light *source A* may have any polygonal shape, and is not limited to a triangular or a rectangular border.

Two directions are then meaningful:

- $\overrightarrow{r_{\omega_o}}$ is the unit reflected view direction, which is associated with a specular cosine lobe L1 according to the Phong distribution;
- $\overrightarrow{\omega_A}$ is a unit direction towards the light source *A.*

The specular cosine lobe corresponding to the reflected view direction $\overrightarrow{r_{\omega_o}}$ is governed by equation (2) and can be written as a function $c_1$ so that for any vector $\vec{v}$:

$$c_1\left(\vec{v}; \overrightarrow{r_{\omega_o}}, n\right) = \max(0, \overrightarrow{r_{\omega_o}} . \vec{v})^n \qquad (3)$$

with n being the Phong exponent.

In compliance with the present disclosure, the unit direction $\overrightarrow{\omega_A}$ is itself associated with a cosine lobe L2, hereinafter designated as an illumination lobe, which can be written as a function $c_2$ having an exponent $\lambda_A$ so that for any vector $\vec{v}$:

$$c_2(\vec{v}; \overrightarrow{\omega_A}, \lambda_2) = \max(0, \overrightarrow{\omega_A} . \vec{v})^{\lambda_A} \qquad (4)$$

Finally, both density distributions can be expressed as cosine lobes in the form:

$$c(\vec{v}; \vec{a}, \lambda) = \max(0, \vec{a} \cdot \vec{v})^{\lambda} \tag{5}$$

with $\vec{a}$ being a unit axis and $\lambda$ an exponent for the concerned cosine lobe.

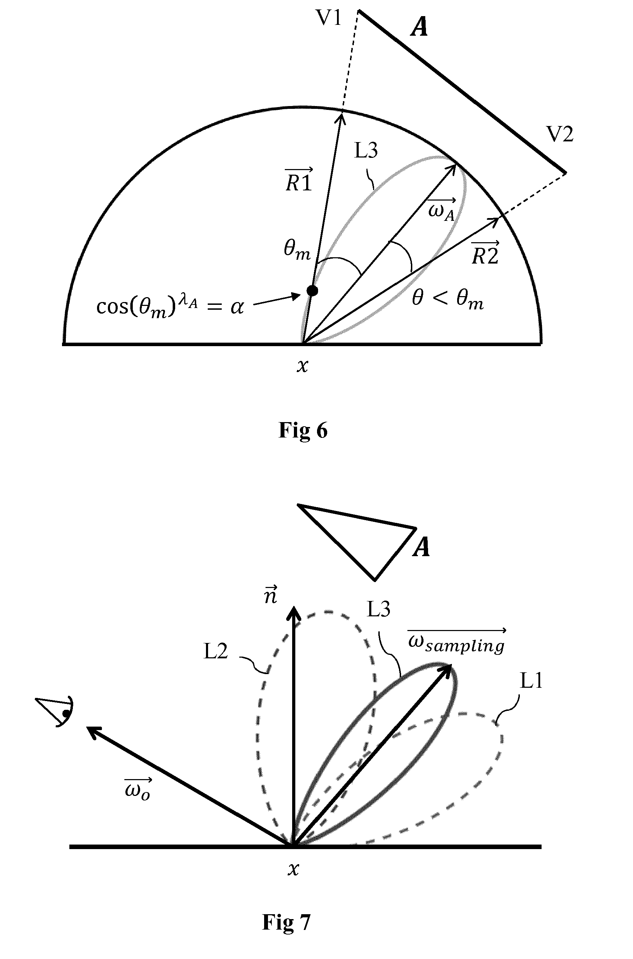

The computation of the illumination lobe L2 is carried out as follows, in relation with Figures 5 and 6. The lobe L2 is defined by its unit axis $\overrightarrow{\omega_A}$ and its exponent $\lambda_A$. The following algorithm is implemented:

- Compute a center of a spherical polygon, obtained as a projection of the area light source A onto the unit hemisphere centered on point x and directed along normal vector $\vec{n}$. That center consists in a mean of all normalized directions towards each vertex V1, V2, V3 of light source A.
- Assign to the unit direction $\overrightarrow{\omega_A}$ the unit direction from point x towards the center of the spherical polygon (see Figure 5).
- Compute the angles between the unit direction $\overrightarrow{\omega_A}$ and unit rays $\vec{R}_1, \vec{R}_2, \vec{R}_3$ pointing respectively from point x towards the vertices V1, V2, V3 of the light source A. The greatest of those angles $\theta$ corresponds to a furthest vertex and is noted $\theta_m$, This is visible on Figure 6, on which vertex V3 is omitted and showing V1 as the furthest vertex.
- Assign to the exponent $\lambda_A$ the following value:

$$\frac{\ln(\alpha)}{\ln(cos(\theta_m))} \tag{6}$$

where $\alpha$ is an adjustment parameter comprised between 0 and 1, and preferably equal to 0.1. The illumination lobe L2 takes that value $\alpha$ at the furthest vertex V1, the lobe value being higher in other vertex directions V2 and V3. The value of 0.1 for $\alpha$ proves particularly advantageous. Indeed, considering a cosine lobe function of the angle $\theta$ with respect to the unit direction $\overrightarrow{\omega_A}$, corresponding to the illumination lobe L2, a bit more than 90 % of the area (integral) of that cosine lobe function is encapsulated over the angle range between 0 and $\pm\ \theta_m$.

The same algorithm applies likewise for any polygonal area light and any corresponding number of vertices.
The operation for representing the approximated product of the two cosine lobes L1 and L2 will now be developed, in relation with Figure 7.
For sake of convenience, the unit vectors $\overrightarrow{r_{\omega_o}}$ and $\overrightarrow{\omega_A}$ for the respective first and second density distributions corresponding to cosine lobes L1 and L2 are noted respectively $\overrightarrow{\omega_1}$ any $\overrightarrow{\omega_2}$, and their exponents n and $\lambda_A$ are noted respectively $\lambda_1$ and $\lambda_2$, Auxiliary parameters $\mu1$ and $\mu2$ are then defined as follows for both lobes L1 and L2, with index i being equal to 1 or 2:

$$\mu_i = -\frac{\ln(2)}{2^{-1/\lambda_i-1}} \tag{7}$$

The approximated lobe product is then determined as a third cosine lobe L3 having a unit axis $\overrightarrow{\omega_3}$ given in function of additional auxiliary parameters $\overrightarrow{q_m}$ and $\mu_m$ by:

$$\overrightarrow{\omega_3} = \frac{\overrightarrow{q_m}}{\|\overrightarrow{q_m}\|} \tag{8}$$

$$\mu_3 = \mu_m \|\overrightarrow{q_m}\| \tag{9}$$

$$\overrightarrow{q_m} = (\mu_1\overrightarrow{\omega_1} + \mu_2\overrightarrow{\omega_2})/\mu_m \tag{10}$$

$$\mu_m = \mu_1 + \mu_2. \tag{11}$$

The third cosine lobe L3 has then an exponent $\lambda_3$ given by:

$$\lambda_3 = -\frac{\ln(2)}{\ln\left(-\frac{\ln(2)}{\mu_3}+1\right)} \qquad\qquad (12)$$

Those formulas prove to correspond to the product of two Spherical Gaussians having respective unit axes $\overrightarrow{\omega_1}$ and $\overrightarrow{\omega_1}$ and exponents $\mu 1$ and $\mu 2$, yielding a further Spherical Gaussian having unit axis $\overrightarrow{\omega_3}$ and exponent $\mu 3$. Those three SGs have respective half-widths coinciding with those of the first, second and third cosine lobes L1, L2 and L3. The product of the two cosine lobes is thus implicitly tuned accordingly.

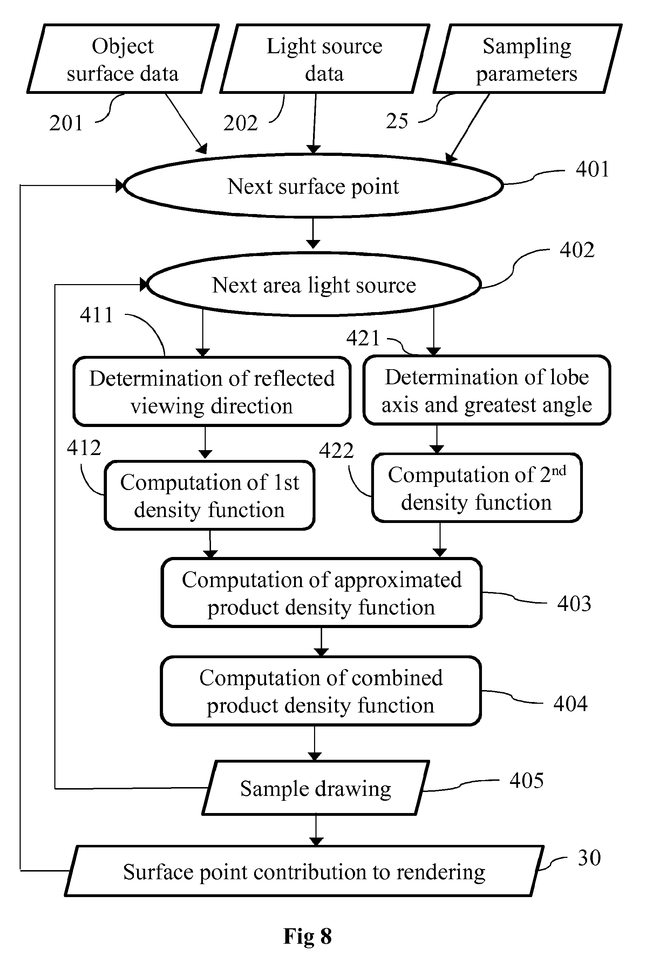

In operation, as illustrated on **Figure 8,** the device 1 proceeds preferably as follows in a rendering operation. Exploited inputs include geometrical data sur as object surface data 201 and light source data 202 extracted from the storage resources 20 and sampling parameters 25 provided by user selections or default options.

A next surface point is considered at step 401 and a next area light source at step 402 - which are advantageously processed in parallel for various surface points and light sources.

In a first series of steps dedicated to a first density function that corresponds to the BRDF at the current surface point, a reflected viewing direction is determined at step 411. The first corresponding density function represented by the first cosine lobe L1 is then computed at step 412. In a second series of steps dedicated to a second density function that corresponds to the lighting by the current area light source, a lobe axis and a greatest angle are determined at step 421. The second corresponding density function represented by the second cosine lobe L2 is then computed at step 422, as explained above.

Based on the computation of the first and second cosine lobes L1 and L2, a combined product density function corresponding to the third cosine lobe L3 is computed at step 404.

Sample drawing takes place accordingly at step 405 for the current area light source, and a next light source can be considered. Likewise, the contribution of the current surface point to the 3D rendering at step 30 leads to considering a next surface point for pursuing the rendering.

Though the represented steps show a surface point processing iterated for various light sources, it should be clear to the skilled person that instead, a light source processing could be iterated for various surface points, or a parallel processing of both iterative operations could be carried out.

In test comparisons for various Phong exponents (5, 50, 500, 5000) between the present method, an analytical solution and Monte Carlo integration with common BRDF sampling, a clear gain is obtained and confirmed with RMSE (Root Mean Square Error) differences.

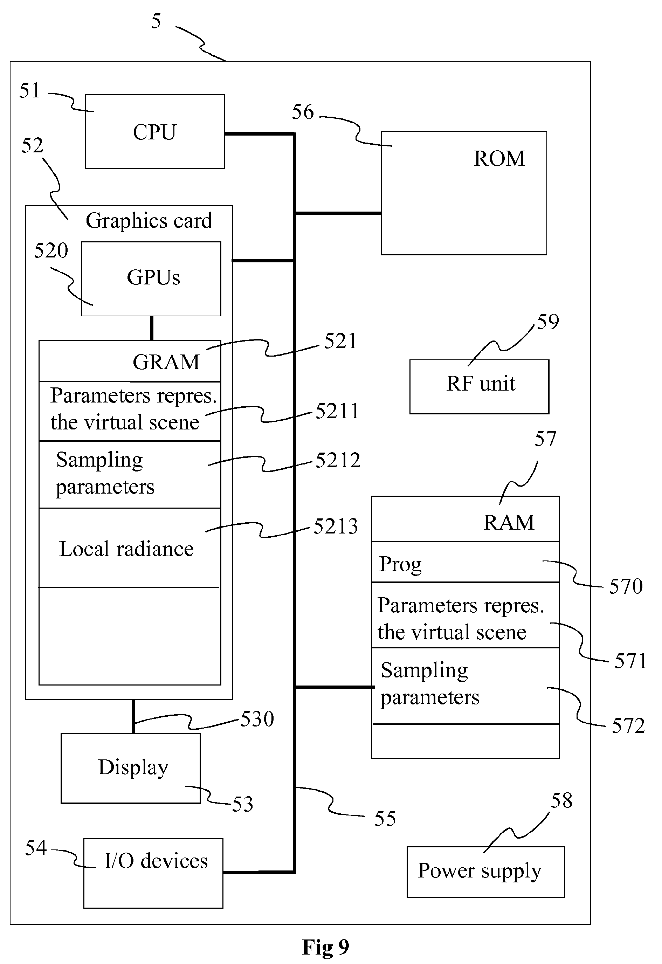

A particular apparatus 5, visible on **Figure 9,** is embodying the device 1 described above. It corresponds for example to a personal computer (PC), a laptop, a tablet, a smartphone or a games console - such as a specialized games console producing and displaying images live. The apparatus 5 comprises the following elements, connected to each other by a bus 55 of addresses and data that also transports a clock signal:

- a microprocessor 51 (or CPU) ;
- a graphics card 52 comprising several Graphical Processor Units (or GPUs) 520 and a Graphical Random Access Memory (GRAM) 521;
- a non-volatile memory of ROM type 56;
- a RAM 57;
- one or several I/O (Input/Output) devices 54 such as for example a keyboard, a mouse, a joystick, a webcam; other modes for introduction of commands such as for example vocal recognition are also possible;
- a power source 58 ; and
- a radiofrequency unit 59.

The apparatus 5 also comprises a display device 53 of display screen type directly connected to the graphics card 52 to display synthesized images calculated and composed in the graphics card, for example live. The use of a dedicated bus to connect the display device 53 to the graphics card 52 offers the advantage of having much greater data transmission bitrates and thus reducing the latency time for the displaying of images composed by the graphics card. According to a variant, a display device is external to apparatus 5 and is connected thereto by a cable or wirelessly for transmitting the display signals. The apparatus 5, for example the graphics card 52, comprises an interface for transmission or connection adapted to transmit a display signal to an external display means such as for example an LCD or plasma screen or a video-projector. In this respect, the RF unit 59 can be used for wireless transmissions.

It is noted that the word "register" used in the description of memories 521, 56, and 57 designates in each of the memories mentioned, both a memory zone of low capacity (some binary data) as well as a memory zone of large capacity (enabling a whole program to be stored or all or part of the data representative of data calculated or to be displayed). Also, the registers represented for GRAM 521 can be arranged and constituted in any manner, and each of them does not necessarily correspond to adjacent memory locations and can be distributed otherwise (which covers notably the situation in which one register includes several smaller registers).

When switched-on, the microprocessor 51 loads and executes the instructions of the program contained in the RAM 57.

The random access memory 57 comprises notably:

- in a register 570, the operating program of the microprocessor 51 responsible for switching on the apparatus 5,
- in a register 571, parameters representative of the scene (for example modelling parameters of the object(s) of the scene, lighting parameters of the scene);
- in a register 572, sampling parameters, such as e.g. parameter $\alpha$.

The algorithms implementing the steps of the method specific to the present disclosure and described above are stored in the memory GRAM 521 of the graphics card 52 associated with the apparatus 5 implementing those steps. When switched on and once the parameters 571 and 572 representative of the environment and peak-shape functions data are loaded into the RAM 57, the graphic processors 520 of graphics card 52 load those parameters into the GRAM 521 and execute the instructions of those algorithms in the form of microprograms of "shader" type using HLSL (High Level Shader Language) language or GLSL (OpenGL Shading Language) for example.

The random access memory GRAM 521 comprises notably:

- in a register 5211, the parameters representative of the scene,
- in a register 5212, the loaded sampling parameters,
- in a register 5213, local radiance computed in the frame of the rendering operations.

According to a variant, at least some of the data pertaining to primitives are stored in the RAM 57 and processed by the microprocessor 51. This variant however causes greater latency time in the composition of an image comprising a representation of the environment composed from microprograms contained in the GPUs 520 as the data must be transmitted from the graphics card to the random access memory 57 passing by the bus 55, for which the transmission capacities are generally inferior to those available in the graphics card for transmission of data from the GPUs 520 to the GRAM 521 and vice-versa.

According to another variant, the power supply 58 is external to the apparatus 1.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. Notably, other BRDF models can be exploited while preserving the described functionalities. All those possibilities are contemplated by the present disclosure.

**Claims**

1. A device (1, 5) for rendering a 3D scene comprising at least one surface and illuminated by at least one area light source (A), said device including at least one processor configured for representing a glossy part of a radiance of said at least one surface by drawing samples in the 3D scene between at least one of said at least one area light source, designated as a current area light source, and said at least one surface, according to a random sampling process exploiting at least one density function (L3) for randomly drawing said samples, said density function being obtained for one shading point (x) of said at least one surface, designated as a current surface point, from a product of a first density distribution associated with reflectance properties at said current surface point and with a view direction ($\vec{\omega_o}$), and of a second density distribution associated with geometrical properties of said current area light source,
**characterized in that** said first density distribution is represented by a first cosine lobe (L1) and said second density distribution is represented by a second cosine lobe (L2).

2. A device (1, 5) according to claim 1, **characterized in that** said product of said first density distribution (L1) and said second density distribution (L2) is represented by a third cosine lobe (L3).

3. A device (1, 5) according to claim 2, **characterized in that** said first cosine lobe (L1) having a first normalized axis

$\overrightarrow{\omega_1}$ and a first exponent $\lambda_1$, said second cosine lobe (L2) having a second normalized axis $\overrightarrow{\omega_2}$ and a second exponent $\lambda_2$, and said third cosine lobe (L3) having a third normalized axis $\overrightarrow{\omega_3}$ and a third exponent $\lambda_3$, said at least one processor is configured for determining said third normalized axis $\overrightarrow{\omega_3}$ and third exponent $\lambda_3$ from said first and second exponents $\lambda_1$ and $\lambda_2$ and from said first and second normalized axes $\overrightarrow{\omega_1}$ and $\overrightarrow{\omega_2}$, by means of following computation formulas, where ln designates a logarithm: for

$$i = 1, 2, \quad \mu_i = -\frac{\ln(2)}{2^{-1/\lambda_i} - 1}$$

$$\mu_m = \mu_1 + \mu_2$$

$$\overrightarrow{q_m} = (\mu_1 \overrightarrow{\omega_1} + \mu_2 \overrightarrow{\omega_2})/\mu_m$$

$$\overrightarrow{\omega_3} = \frac{\overrightarrow{q_m}}{\|\overrightarrow{q_m}\|}$$

$$\mu_3 = \mu_m \|\overrightarrow{q_m}\|$$

$$\lambda_3 = -\frac{\ln(2)}{\ln\left(-\frac{\ln(2)}{\mu_3} + 1\right)}$$

with $\mu_1$, $\mu_2$, $\mu_m$, $\overrightarrow{q_m}$ being intermediary parameters and $\|.\|$ designating a norm.

4. A device (1, 5) according to claim 2, **characterized in that** said first cosine lobe (L1) having a first normalized axis $(\overrightarrow{\omega_1})$ and a first exponent $(\lambda_1)$, and being defined as a first cosine lobe function of a first offset angle with respect to said first normalized axis, said second cosine lobe (L2) having a second normalized axis $(\overrightarrow{\omega_2})$ and a second exponent $(\lambda_2)$, and being defined as a second cosine lobe function of a second offset angle with respect to said second normalized axis, and said third cosine lobe (L3) having a third normalized axis $(\overrightarrow{\omega_3})$ and a third exponent $(\lambda_3)$, and being defined as a third cosine lobe function of a third offset angle with respect to said third normalized axis, said at least one processor is further configured for determining said third normalized axis and third exponent of said third cosine lobe (L3) from said first and second normalized axes and said first and second exponents, so that said first cosine lobe function coincides with a first Spherical Gaussian function of said first offset angle at at least one first representative position on said first cosine lobe function and first Spherical Gaussian function, said second cosine lobe function coincides with a second Spherical Gaussian function of said second offset angle at at least one second representative position on said second cosine lobe function and second Spherical Gaussian function, and said third cosine lobe function coincides with a third Spherical Gaussian function of said third offset angle at at least one third representative position on said third cosine lobe function and second Spherical Gaussian function, said third Spherical Gaussian function being a product of said first and second Spherical Gaussian functions and at least one of said first, second and third representative positions being distinct from a half-maximum position.

5. A device (1, 5) according to any of the preceding claims, **characterized in that** said second cosine lobe (L2) being associated with a second normalized axis $(\overrightarrow{\omega_2})$ and with a second exponent $(\lambda_2)$, said second normalized axis is directed from said current surface point (x) towards a center of said current area light source (A).

6. A device (1, 5) according to claim 5, **characterized in that** said current area light source (A) having an edge, said second exponent $(\lambda_2)$ is given in function of a greatest angle $\theta_m$ between said second normalized axis $(\overrightarrow{\omega_2})$ and a direction $(\overrightarrow{R_1})$ from said current surface point (x) towards said edge, by: $\ln(\alpha) / \ln(\cos(\theta_m))$, with $\alpha$ being a parameter between 0 and 1.

**7.** A device (1, 5) according to claim 6, **characterized in that** said parameter $\alpha$ is comprised between 0.05 and 0.2 and is preferably worth 0.1.

**8.** A device (1, 5) according to any of the preceding claims, **characterized in that** said first cosine lobe (L1) is directed along a normalized reflected view direction $(\overrightarrow{r_{\omega_o}})$, said reflected view direction corresponding to a reflection against said at least one surface at said current surface point (x) of an additive inverse of said view direction $(\overrightarrow{\omega_o})$.

**9.** A device (1, 5) according to claim 8, **characterized in that** said first cosine lobe (L1) corresponding to a Phong distribution model with a Phong exponent (n), modelling a bi-directional reflectance distribution, said first cosine lobe is associated with a first normalized axis $(\overrightarrow{\omega_1})$ equal to said reflected view direction $(\overrightarrow{r_{\omega_o}})$ and with a first exponent $(\lambda_1)$ equal to said Phong exponent (n).

**10.** A device (1, 5) according to any of claims 1 to 9, **characterized in that** said random sampling process relies on a discretization of a surface of said area light source (A), said samples corresponding to integration directions.

**11.** A device (1, 5) according to any of claims 1 to 9, **characterized in that** said random sampling process relies on a stochastic Monte Carlo integration, said samples corresponding to ray paths.

**12.** A GPU or Graphics Processing Unit comprising at least one processor adapted to creating images, at least one frame buffer adapted to storing said created images and at least one output to a display adapted to providing said created images from said at least one frame buffer to said display, **characterized in that** said GPU comprises a device (1, 5) compliant with any of claims 1 to 11.

**13.** A method for rendering a 3D scene comprising at least one surface and illuminated by at least one area light source (A), said method including representing by at least one processor a glossy part of a radiance of said at least one surface by drawing samples in the 3D scene between at least one of said at least one area light source, designated as a current area light source, and said at least one surface, according to a random sampling process exploiting at least one density function (L3) for randomly drawing said samples, said method comprising:

 - determining a first density distribution associated with reflectance properties at one shading point (x) of said at least one surface, designated as a current surface point, and with a view direction $(\overrightarrow{\omega_o})$,
 - determining a second density distribution associated with geometrical properties of said current area light source,
 - obtaining said density function for said current surface point from a product of said first density distribution and said second density distribution,

**characterized in that** said first density distribution is represented by a first cosine lobe (L1) and said second density distribution is represented by a second cosine lobe (L2).

**14.** A method according to claim 13 **characterized in that** it is executed by a device according to any of claims 1 to 11.

**15.** Computer program for rendering a 3D scene, comprising software code adapted to perform steps of a method compliant with claim 13 or 14.

20

Scene data

Importance
Sampling selection    13

Determination of
density function    12

Iterative sample
drawing    11

1

User Interface

14

**Fig 1**

**Fig 2**

**Fig 3**

**Fig 4**

**Fig 5**

**Fig 6**

**Fig 7**

Object
surface data

Light source
data

Sampling
parameters

201

202

25

Next surface point — 401

Next area light source — 402

411

Determination of reflected
viewing direction

421

Determination of lobe
axis and greatest angle

412

Computation of 1st
density function

422

Computation of 2$^{nd}$
density function

Computation of approximated
product density function — 403

Computation of combined
product density function — 404

Sample drawing — 405

Surface point contribution to rendering — 30

**Fig 8**

**Fig 9**

Europäisches
Patentamt

European
Patent Office

Office européen
des brevets

# EUROPEAN SEARCH REPORT

Application Number

EP 16 30 6126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEUNIER S ET AL: "Cosine lobes for interactive direct lighting in dynamic scenes", COMPUTERS AND GRAPHICS, ELSEVIER, GB, vol. 34, no. 6, 1 December 2010 (2010-12-01), pages 767-778, XP027514785, ISSN: 0097-8493, DOI: 10.1016/J.CAG.2010.08.002 [retrieved on 2010-11-22] * abstract * * sections 2, 3 and 4.1 * | 1,2,5, 10-15 | INV. G06T15/50 |
| A,D | SEBASTIAN HERHOLZ ET AL: "Product Importance Sampling for Light Transport Path Guiding", COMPUTER GRAPHICS FORUM, vol. 35, no. 4, 1 July 2016 (2016-07-01), pages 67-77, XP055352407, GB ISSN: 0167-7055, DOI: 10.1111/cgf.12950 * abstract * * section 4 * | 1-15 | |
| A | Anonymous: "The Cosine Lobe Model.", , 11 August 2011 (2011-08-11), XP055352666, Retrieved from the Internet: URL:https://web.archive.org/web/2011081122 4048/http://www.cs.utah.edu/~wmartin/lafor tune [retrieved on 2017-03-08] * the whole document * | 1-15 | |

TECHNICAL FIELDS
SEARCHED      (IPC)

G06T

The present search report has been drawn up for all claims

| Place of search | Date of completion of the search | Examiner |
|---|---|---|
| Berlin | 8 March 2017 | Gao, Miao |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES ARVO.** Analytic methods for simulated light transport. Yale University, 1995
- Applications of Irradiance Tensors to the Simulation of Non-Lambertian Phenomena. Computer Graphics Proceedings, Annual Conference Series. ACM SIG-GRAPH, 1995
- Robust Monte Carlo methods for light transport simulation. **ERIC VEACH.** Stanford University. 1997
- **S. HERNHOLZ.** Product Importance Sampling for Light Transport Path Guiding. *Eurographics Symposium on Rendering, Computer Graphics Forum,* July 2016, vol. 35 (4